# EUROPEAN PATENT SPECIFICATION

(11) **EP 3 531 036 B1**
(45) Date of publication and mention of the grant of the patent: **30.09.2020**
(21) Application number: 16921558.9
(22) Date of filing: 21.11.2016
(51) Int. Cl.: F24F 11/30, B60H 1/00, F24F 11/38, G05B 23/02, G06F 11/34

(54) **DETERIORATION DIAGNOSIS SYSTEM, DETERIORATION DIAGNOSIS METHOD, AND DETERIORATION DIAGNOSIS PROGRAM**
SYSTEM, VERFAHREN UND PROGRAMM ZUR DIAGNOSE EINER VERSCHLECHTERUNG
SYSTÈME, PROCÉDÉ ET PROGRAMME DE DIAGNOSTIC DE DÉTÉRIORATION

(43) Date of publication of application: 28.08.2019
(73) Proprietor: Mitsubishi Electric Corporation, Chiyoda-ku Tokyo 100-8310 (JP)
(72) Inventor: TSUJIMURA, Tatsunori, Tokyo 100-8310 (JP)
(74) Representative: Pfenning, Meinig & Partner mbB
(86) International application number: PCT/JP2016/084465
(87) International publication number: WO 2018/092312

(56) References cited:
- EP-A1- 2 913 601
- EP-A1- 2 950 626
- WO-A1-2015/129512
- CN-A- 105 135 591
- JP-A- 2004 143 967
- JP-A- 2007 240 036
- JP-A- 2008 080 928
- JP-A- 2015 193 359
- US-A1- 2003 079 483
- US-A1- 2014 262 134

## Description

### Technical Field

The present invention relates to a deterioration diagnosis system, a deterioration diagnosis method and a deterioration diagnosis program.

### Background Art

An inspection method of an air conditioner for a vehicle is currently a periodic inspection. A railway service provider is considering application of an inspection method called a deterioration diagnosis in addition to the periodic inspection. The deterioration diagnosis is a method to detect aging deterioration and abnormality of a vehicle air conditioner by analyzing status information of the vehicle air conditioner. The railway service provider tries to reduce the purchase and replacing costs, and to stabilize train operation by replacing devices or components in accordance with the age of an apparatus for each vehicle air conditioner, by applying the deterioration diagnosis.

Patent Literature 1 discloses a method to calculate a deterioration judgment reference value corresponding to a plurality of outdoor air temperature conditions at the time of initial operation of an air conditioner.

Patent Literature 2 discloses a method to judge deterioration by setting beforehand a criterion operation pattern indicating a valid operation state of a compressor of a vehicle air conditioner, and comparing an actual operation pattern obtained at the time when the compressor actually operates with the criterion operation pattern.

Patent Literature 3 discloses a method to judge a degree of deterioration of a freezer by comparing data in the first year with data measured in and after the second year of power consumption and an outside air temperature.

Patent Literature 4 describes an error detection system for detecting an error in a cooling apparatus mounted in a power converter that drives, for example, a motor. The error detection system includes a first temperature sensor, a second temperature sensor, and a current sensor. The first temperature sensor measures a representative temperature of the cooling apparatus. The second temperature sensor measures an ambient air temperature. The current sensor measures an input/output current controlled by the power converter. The error detection system receives measured signals sent from the first temperature sensor, the second temperature sensor, and the current sensor and thereby estimates the performance of the cooling apparatus.

### Citation List

### Patent Literature

Patent Literature 1: JP2014-214970 A
Patent Literature 2: JP2007-083872 A
Patent Literature 3: JP2010-243092 A
Patent Literature 4: EP 2 950 626 A1

### Summary of Invention

### Technical Problem

The method disclosed in Patent Literature 1 is a method performed during actual operation of an air conditioner. In this method, since calculation of the deterioration judgment reference value is not completed until the plurality of outdoor air temperature conditions are met, time is required for calculation of the deterioration judgment reference value.

By the method disclosed in Patent Literature 2, since there is not pattern indicating a deterioration state in the criterion operation pattern, it is impossible to judge deterioration only by the comparison result.

By the method disclosed in Patent Literature 3, since there is no data indicating a deterioration state similarly as the method disclosed in Patent Literature 2, it is impossible to judge deterioration only by the comparison result.

The present invention is aimed at reducing the time required for calculation of a reference value to perform a deterioration diagnosis using data indicating a deterioration state.

### Solution to Problem

The above problems are solved by the subject-matter according to the independent claims.

### Advantageous Effects of Invention

According to the present invention, a performance of an apparatus during actual operation under an environmental condition the same as an environmental condition at the time of a test is estimated. Then, in accordance with the performance estimated, a correction factor being a reference value to perform a deterioration diagnosis using data indicating a deterioration state is calculated. Thus, it is possible to reduce the time required for calculation of the correction factor.

### Brief Description of Drawings

Fig. 1 is a block diagram illustrating a configuration of a deterioration diagnosis device according to a first embodiment;
Fig. 2 is a diagram illustrating a data format of operation data according to the first embodiment;
Fig. 3 is a diagram illustrating a data format of test data according to the first embodiment;
Fig. 4 is a diagram illustrating a data format of test data according to the first embodiment;
Fig. 5 is a flowchart illustrating an operation of an operation unit of the deterioration diagnosis device according to the first embodiment;
Fig. 6 is a flowchart illustrating an operation of a reception unit of the deterioration diagnosis device according to the first embodiment;
Fig. 7 is a flowchart of an operation of an accumulation unit of the deterioration diagnosis device according to the first embodiment;
Fig. 8 is a flowchart illustrating an operation of a calculation unit of the deterioration diagnosis device according to the first embodiment;
Fig. 9 is a flowchart illustrating an operation of the calculation unit of the deterioration diagnosis device according to the first embodiment;
Fig. 10 is a flowchart illustrating an operation of the calculation unit of the deterioration diagnosis device according to the first embodiment;
Fig. 11 is a flowchart illustrating an operation of the calculation unit of the deterioration diagnosis device according to the first embodiment;
Fig. 12 is a flowchart illustrating an operation of a storage unit of the deterioration diagnosis device according to the first embodiment;
Fig. 13 is a flowchart illustrating an operation of the storage unit of the deterioration diagnosis device according to the first embodiment;
Fig. 14 is a flowchart illustrating an operation of a diagnosis unit of the deterioration diagnosis device according to the first embodiment; and
Fig. 15 is a flowchart illustrating an operation of the diagnosis unit of the deterioration diagnosis device according to the first embodiment.

### Description of Embodiment

Hereinafter, an embodiment of the present invention will be described using diagrams. In each diagram, same or corresponding parts are denoted by same signs. The explanation of the same or corresponding parts will be appropriately omitted or simplified in the description of the present embodiment. The present invention is not limited to the embodiment described below, and may be applied various alterations as needed. For example, the embodiment described below may be partially performed.

### First Embodiment

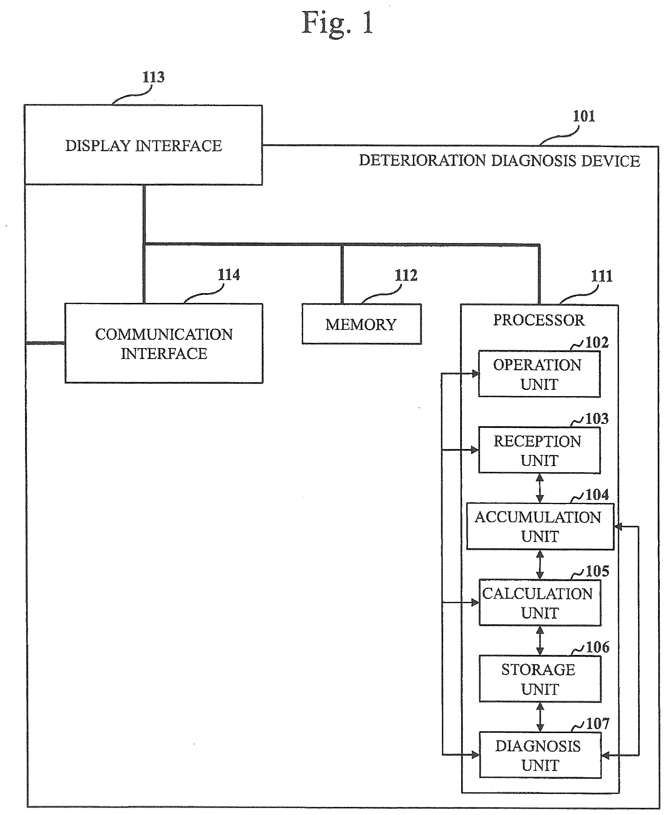

The present embodiment will be described using Fig. 1 through Fig. 15.

### ***Explanation of Configuration***

The configuration of a deterioration diagnosis device 101 according to the present embodiment will be described with reference to Fig. 1.

The deterioration diagnosis device 101 is a computer. The deterioration diagnosis device 101 is equipped with a processor 111, and further equipped with other hardware components such as a memory 112, a display interface 113 and a communication interface 114, etc. The processor 111 is connected to other hardware components via a signal line to control the other hardware components.

The deterioration diagnosis device 101 is equipped with an operation unit 102, a reception unit 103, an accumulation unit 104, a calculation unit 105, a storage unit 106 and a diagnosis unit 107, as functional components. The functions of the operation unit 102, the reception unit 103, the accumulation unit 104, the calculation unit 105, the storage unit 106 and the diagnosis unit 107 are realized by software.

The processor 111 is an IC to perform various processes. "IC" is an abbreviation for an integrated circuit. The processor 111 is, for example, a CPU. "CPU" is an abbreviation for a central processing unit.

The memory 112 stores operation data 201, and test data 301 and 401. The memory 112 is, for example, a flash memory or a RAM. "RAM" is an abbreviation for a random access memory.

The display interface 113 is connected to a display. The display is, for example, an LCD. "LCD" is an abbreviation for a liquid crystal display.

The communication interface 114 is connected to a dedicated line or a network. The communication interface 114 includes a receiver to receive data and a transmitter to transmit data. The communication interface 114 is, for example, a communication chip or an NIC. "NIC" is an abbreviation for a network interface card.

The deterioration diagnosis device 101 may be equipped with an input interface as a hardware component. The input interface is connected to an input device. The input device is, for example, a mouse, a keyboard or a touch panel.

The memory 112 stores a deterioration diagnosis program being a program to realize functions of the operation unit 102, the reception unit 103, the accumulation unit 104, the calculation unit 105, the storage unit 106 and the diagnosis unit 107. The deterioration diagnosis program is read into the processor 111, and executed by the processor 111. The memory 112 also stores an OS. "OS" is an abbreviation for an operating system. The processor 111 executes the deterioration diagnosis program while executing the OS. A part or all of the deterioration diagnosis program may be embedded into the OS.

The deterioration diagnosis program and the OS may be stored in an auxiliary storage device. The auxiliary storage device is, for example, a flash memory or an HDD. "HDD" is an abbreviation for a hard disk drive. The deterioration diagnosis program and the OS stored in the auxiliary storage device are loaded into the memory 112, and executed by the processor 111.

The deterioration diagnosis device 101 may include a plurality of processors to replace the processor 111. These plurality of processors share execution of the deterioration diagnosis program. Each processor is an integrated circuit to perform various processes similarly as the processor 111.

The information, data, signal values and variable values indicating results of processes of the operation unit 102, the reception unit 103, the accumulation unit 104, the calculation unit 105, the storage unit 106 and the diagnosis unit 107 are stored in the memory 112, the auxiliary storage device, or a resister or a cache memory inside the processor 111.

The deterioration diagnosis program may be stored in a portable record medium such as a magnetic disk or an optical disk.

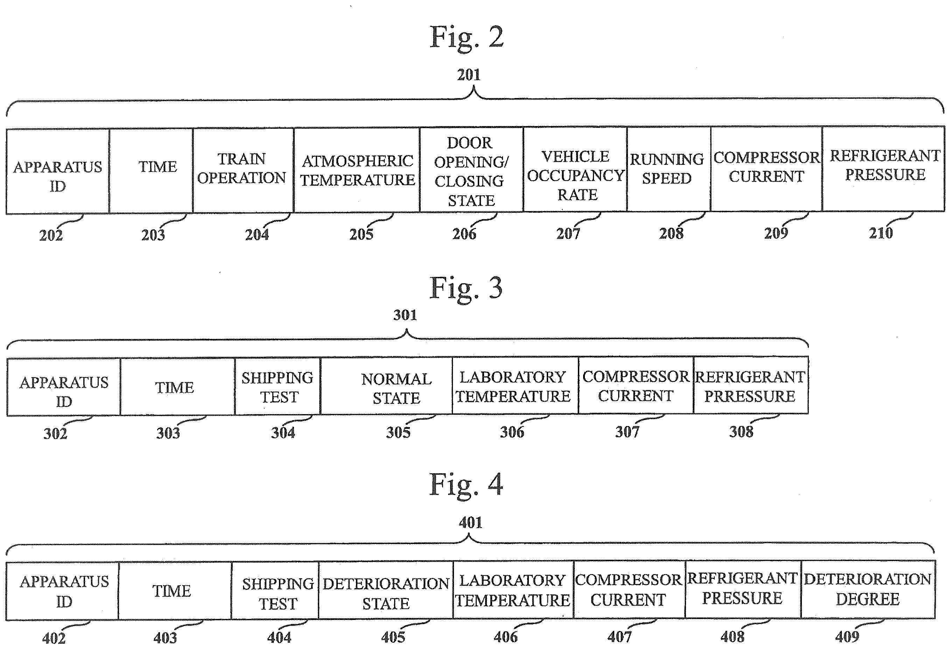

A data format of the operation data 201 will be described with reference to Fig. 2.

The operation data 201 is data including an operation performance value, and one or more condition values. The operation performance value is a performance value obtained by measuring performance of the apparatus during actual operation. The condition values included in the operation data 201 are values denoting environment conditions during actual operation.

The apparatus may be an arbitrary apparatus, whereas the apparatus is a vehicle air conditioner of a train in the present embodiment. Thus, in the present embodiment, the operation data 201 is data including status information of the vehicle air conditioner obtained during operation of the train. The status information of the vehicle air conditioner is information denoting the performance of the vehicle air conditioner, i.e., a performance value.

The operation data 201 includes an apparatus ID 202, a time 203 and a train operation 204. "ID" is an abbreviation for an identifier.

The apparatus ID 202 is a value denoting a serial number of the vehicle air conditioner. The time 203 is a value denoting a clock time when the performance of the vehicle air conditioner is measured. The train operation 204 is a value denoting that the performance of the vehicle air conditioner is measured during operation of the train.

The operation data 201 may include a value denoting an arbitrary environmental condition as a condition value, whereas in the present embodiment, the operation data 201 includes an atmospheric temperature 205, a door opening/closing state 206, a vehicle occupancy rate 207 and a running speed 208. As conditional values, values denoting conditions in accordance with specifications for each model of vehicle air conditioners such as an operation strength, set to an air conditioner may be included.

The atmospheric temperature 205 is a value denoting an outside air temperature of a vehicle whereon a vehicle air conditioner indicated by the apparatus ID 202 is mounted. The door opening/closing state 206 is a value denoting an opening/closing state of a door of the vehicle whereon the vehicle air conditioner denoted by the apparatus ID 202 is mounted. The vehicle occupancy rate 207 is a value denoting a ratio of the number of actual passengers to a fixed total number of the vehicle whereon the vehicle air conditioner indicated by the apparatus ID 202 is mounted. The running speed 208 is a value denoting a running speed of the vehicle whereon the vehicle air conditioner denoted by the apparatus ID 202 is mounted.

In the present embodiment, four condition values of the atmospheric temperature 205, the door opening/closing state 206, the vehicle occupancy rate 207 and the running speed 208 are used; however, one condition value may be used, or may be two, three, or equal to or more than five condition values may be used.

The operation data 201 may include a value denoting an arbitrary performance as a performance value, whereas, in the present embodiment, the operation data 201 may include a compressor current 209 and a refrigerant pressure 210.

The compressor current 209 is a current value of a compressor of the vehicle air conditioner indicated by the apparatus ID 202. The refrigerant pressure 210 is a value denoting a pressure of refrigerant gas inside the vehicle air conditioner denoted by the apparatus ID 202.

In the present embodiment, two performance values of the compressor current 209 and the refrigerant pressure 210 are used; however, only one performance value may be used, or three or more performance values may be used.

A data format of the test data 301 will be described with reference to Fig. 3.

The test data 301 is data including a performance value before deterioration, and one or more condition values. The performance value before deterioration is a performance value obtained by testing a performance of an apparatus before deterioration. The condition value included in the test data 301 is a value denoting an environmental condition at the time of test.

The apparatus may be an arbitrary apparatus, whereas in the present embodiment, the apparatus is a vehicle air conditioner of a train as described above. Thus, in the present embodiment, the test data 301 is data including state information of the vehicle air conditioner obtained by taking the vehicle air conditioner at the time of a shipping test as a normal state.

The test data 301 includes an apparatus ID 302, the clock time 303, a shipping test 304 and a normal state 305.

The apparatus ID 302 is a value denoting a serial number of the vehicle air conditioner. The time 303 is a value denoting a clock time when a performance of the vehicle air conditioner is measured. The shipping test 304 is a value denoting that the performance of the vehicle air conditioner is measured at the time of the shipping test. The normal state 305 is a value denoting that the performance of the vehicle air conditioner is measured when the state of the vehicle air conditioner denoted by the apparatus ID 302 is in the normal state.

The test data 301 may include, as a condition value, a value denoting an environmental condition the same as or similar to the condition value included in the operation data 201, whereas in the present embodiment, the test data 301 includes a laboratory temperature 306.

The laboratory temperature 306 is a value denoting a temperature of a laboratory where the shipping test of the vehicle air conditioner denoted by the apparatus ID 302 is performed. The laboratory temperature 306 corresponds to the atmospheric temperature 205 included in the operation data 201.

While one condition value being the laboratory temperature 306 is used in the present embodiment, two or more condition values may be used.

It is necessary for the test data 301 to include, as a performance value, a value the same as or similar to a performance value included in the operation data 201, whereas in the present embodiment, the test data 301 includes the compressor current 307 and the refrigerant pressure 308.

The compressor current 307 is a current value of a compressor of the vehicle air conditioner denoted by the apparatus ID 302. The refrigerant pressure 308 is a value denoting a pressure of refrigerant gas inside the vehicle air conditioner denoted by the apparatus ID 302.

A data format of the test data 401 will be described with reference to Fig. 4.

The test data 401 is data including a performance value after deterioration, and one or more condition values. The performance value after deterioration is a performance value obtained by testing a performance of an apparatus after deterioration. A condition value included in the test data 401 is a value denoting an environmental condition at the time of a test.

The apparatus may be an arbitrary apparatus, whereas in the present embodiment, the apparatus is the vehicle air conditioner of the train, as described above. Thus, the test data 401 is data including state information of the vehicle air conditioner obtained by taking the vehicle air conditioner under a deterioration state at the time of the shipping test.

The test data 401 includes an apparatus ID 402, a time 403, a shipping test 404 and a deterioration state 405.

The apparatus ID 402 is a value denoting a serial number of the vehicle air conditioner. The time 403 is a value denoting a clock time when a performance of the vehicle air conditioner is measured. The shipping test 404 is a value denoting that a performance of the vehicle air conditioner is measured at the time of the shipping test. The deterioration state 405 is a value denoting that the performance of the vehicle air conditioner is measured when the state of the vehicle air conditioner denoted by the apparatus ID 402 is a deterioration state. At the time of the shipping test, the deterioration state of the vehicle air conditioner is simulated.

It is necessary for the test data 401 to include, as a condition value, a value denoting an environmental condition the same as or similar to a condition value included in the operation data 201, whereas in the present embodiment, the test data 401 includes a laboratory temperature 406.

The laboratory temperature 406 is a value denoting a temperature of a laboratory where the shipping test of the vehicle air conditioner denoted by the apparatus ID 402 is performed. The laboratory temperature 406 corresponds to the atmospheric temperature 205 included in the operation data 201.

While one condition value being the laboratory temperature 406 is used in the present embodiment, two or more condition values may be used.

It is necessary for the test data 401 to include, as a performance value, a value denoting a performance the same as or similar to a performance value included in the operation data 201, whereas in the present embodiment, the test data 401 includes a compressor current 407 and a refrigerant pressure 408.

The compressor current 407 is a current value of a compressor of the vehicle air conditioner denoted by the apparatus ID 402. The refrigerant pressure 408 is a value denoting a pressure of refrigerant gas inside the vehicle air conditioner denoted by the apparatus ID 402.

The test data 401 further includes a deterioration degree 409.

The deterioration degree 409 is a value denoting a degree of deterioration at the time when the deterioration state of the vehicle air conditioner denoted by the apparatus ID 402 is simulated.

### ***Explanation of Operation***

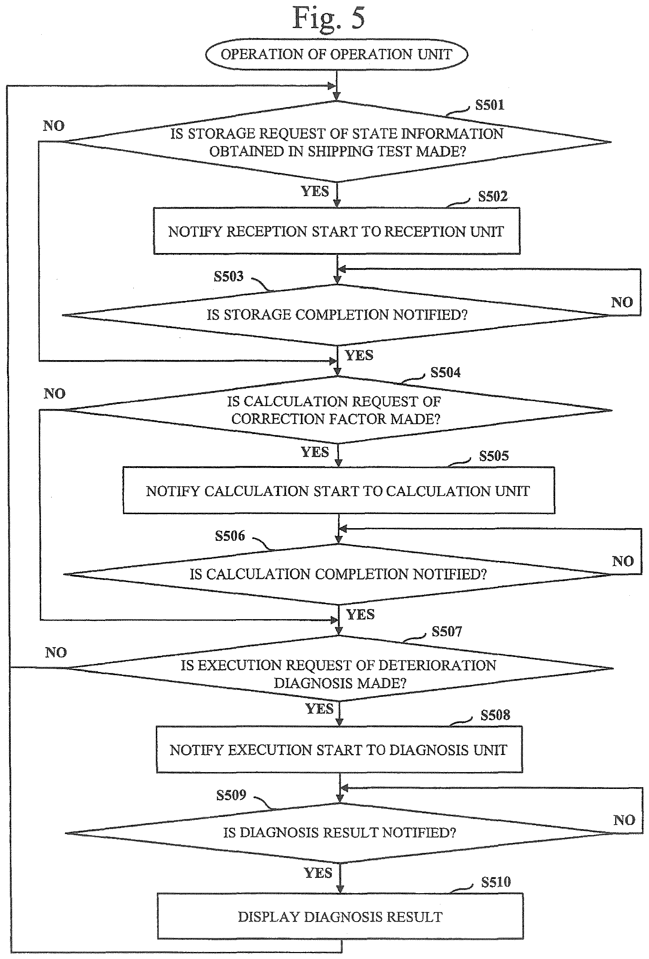

The operation of the deterioration diagnosis device 101 according to the present embodiment will be described with reference to Fig. 5 through Fig. 15. The operation of the deterioration diagnosis device 101 corresponds to a deterioration diagnosis method according to the present embodiment.

In the operation described below, the operation unit 102 displays an operation screen to accept operation by a user on a display with the display interface 113. The reception unit 103 receives state information of the vehicle air conditioner obtained during operation of a train and at the time of a shipping test from outside of the deterioration diagnosis device 101. The accumulation unit 104 stores the state information received by the reception unit 103 by using the memory 112. The calculation unit 105 accesses the memory 112, and retrieves the state information of the vehicle air conditioner obtained in the normal state and the deterioration state at the time of the shipping test, and the state information of the vehicle air conditioner obtained during the operation of the train. The calculation unit 105 generates a reference value of the state information to determine whether the vehicle air conditioner is in the normal state or the deterioration state from the state information retrieved. The storage unit 106 stores the reference value generated by the calculation unit 105 by using the memory 112. The diagnosis unit 107 accesses the memory 112, and retrieves the state information of the vehicle air conditioner obtained during the operation of the train, and the reference value of the state information. The diagnosis unit 107 judges whether the vehicle air conditioner is in the normal state or in the deterioration state by comparing the state information retrieved and the reference value.

In the shipping test, the performance of the vehicle air conditioner is measured beforehand in each state of a normal state and a state simulating deterioration. Simulation of deterioration is performed specifically through simulating filter clogging by blocking a ventilation port, or simulating leakage of refrigerant gas by venting the refrigerant gas. The degree of deterioration is determined by a rate at which the ventilation port is blocked, and a rate of a filling amount of the refrigerant gas. Performance values denoting the performance measured are included in test data 301 and 401.

In a step S501 and a step S502 of Fig. 5, the operation unit 102 notifies reception start to the reception unit 103 when storage of the status information obtained in the shipping test is requested by using an operation screen.

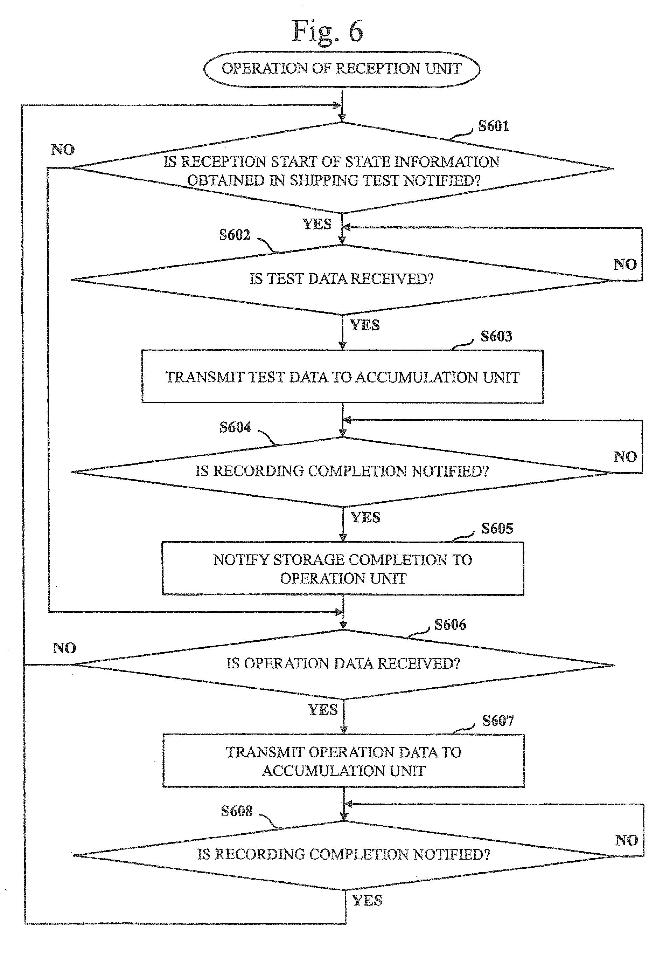

In steps from a step S601 through a step S603 of Fig. 6, the reception unit 103 transmits test data 301 and 401 to the accumulation unit 104 when the test data 301 and 401 upon receiving a notification of the reception start from the operation unit 102.

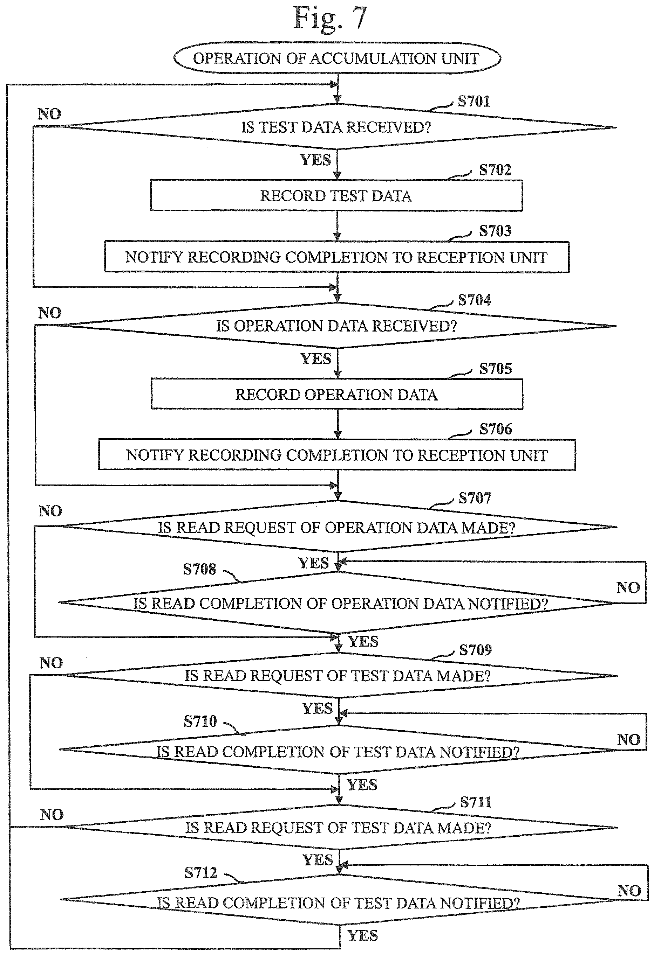

In steps from a step S701 through a step S703 of Fig. 7, upon receiving the test data 301 and 401 transmitted from the reception unit 103, the accumulation unit 104 records the test data 301 and 401, and notifies recording completion to the reception unit 103.

In a step S604 and a step S605 of Fig. 6, the reception unit 103 notifies completion of storage to the operation unit 102 when notification of the recording completion is received from the accumulation unit 104.

Next, state information of the vehicle air conditioner during train operation is stored.

In a step S606 and a step S607 of Fig. 6, the reception unit 103 transmits operation data 201 to the accumulation unit 104 every time the operation data 201 including the state information of the vehicle air conditioner during train operation is received.

In steps from a step S704 through a step S706 of Fig. 7, upon receiving the operation data 201 transmitted from the reception unit 103, the accumulation unit 104 records the operation data 201 and notifies recording completion to the reception unit 103.

In a step S608 of Fig. 6, the reception unit 103 completes operation when notification of the recording completion is received from the accumulation unit 104.

As described above, in the step S705, the accumulation unit 104 accumulates the operation data 201.

Next, a correction factor for comparing state information at the time of train operation and the time of the shipping test.

In a step S504 and a step S505 of Fig. 5, the operation unit 102 notifies calculation start to the calculation unit 105 when calculation of the correction factor is requested by using the operation screen.

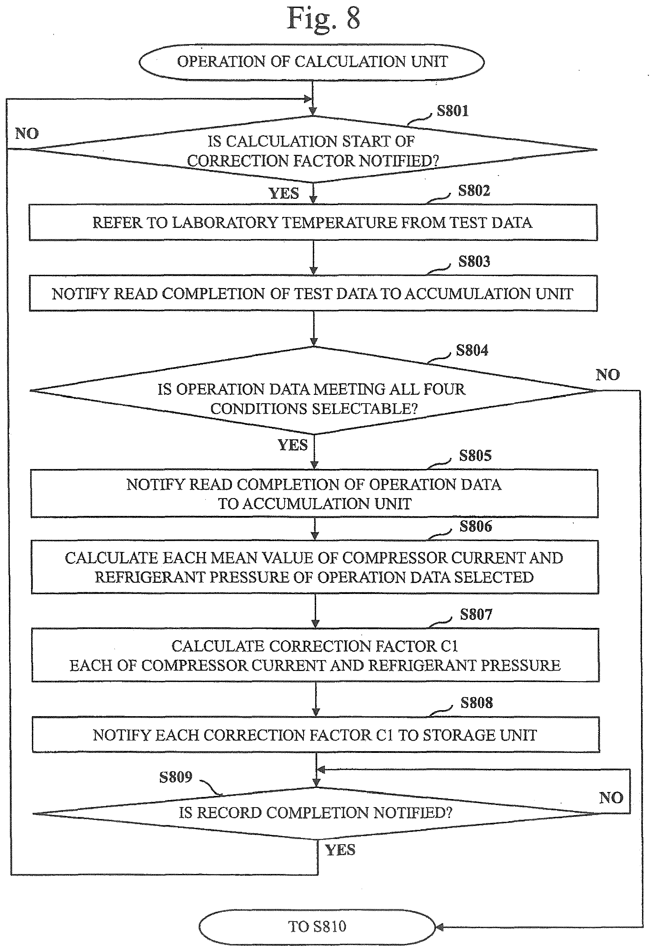

In a step S801 and a step S802 of Fig. 8, upon receiving a notification of the calculation start from the operation unit 102, the calculation unit 105 identifies test data 301 from the shipping test 304 and the normal state 305 of the test data 301 among the data accumulated by the accumulation unit 104, and refers to a laboratory temperature 306. Then, in a step S803 of Fig. 8, the calculation unit 105 notifies read completion to the accumulation unit 104. In a step S709 and a step S710 of Fig. 7, the accumulation unit 104 receives notification of the read completion.

In a step S804 of Fig. 8, the calculation unit 105 identifies the operation data 201 from the train operation 204 of the operation data 201 among the data accumulated by the accumulation unit 104, and selects operation data 201 wherein the atmospheric temperature 205 is equal to the laboratory temperature 306, the door opening/closing state 206 is closing, a vehicle occupancy rate 207 is 0%, and a running speed 208 is 0km/h. Then, in a step S805 of Fig. 8, the calculation unit 105 notifies read completion to the accumulation unit 104. In a step S707 and a step S708 of Fig. 7, the accumulation unit 104 receives notification of the read completion.

In a step S806 of Fig. 8, the calculation unit 105 calculates mean values respectively of compressor current 209 and refrigerant pressure 210 of the operation data selected. Then, in a step S807 of Fig. 8, the calculation unit 105 calculates a quotient of the compressor current 307 of the test data 301 and the mean value of the compressor current 209 as a correction factor C1 of compressor current, and a quotient of the refrigerant pressure 308 of the test data 301 and the mean value of the refrigerant pressure 210 as a correction factor C1 of refrigerant pressure.

In a step S808 of Fig. 8, the calculation unit 105 notifies each correction factor C1 in the storage unit 106.

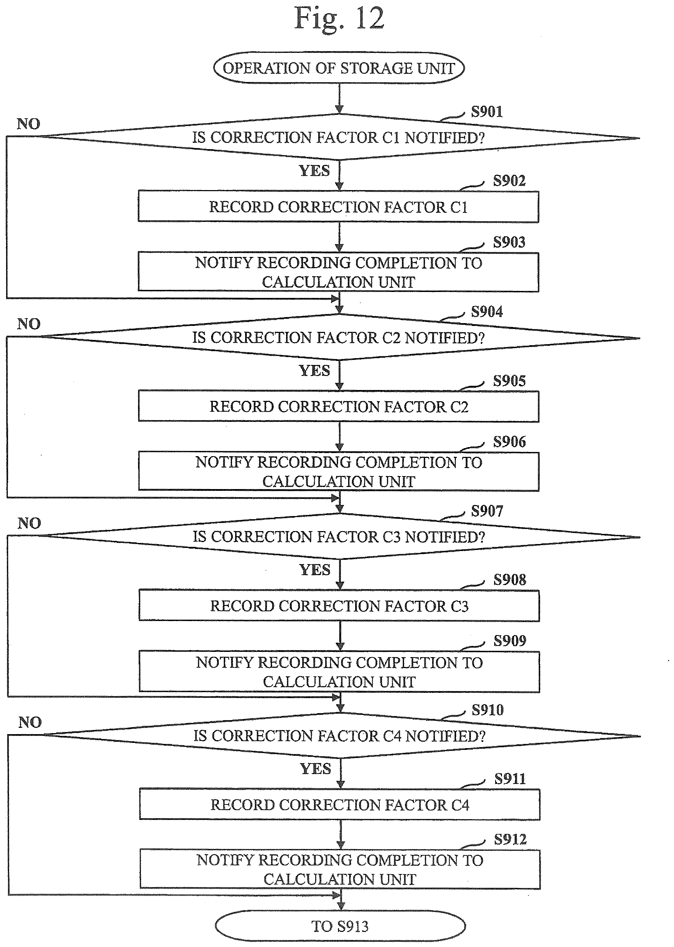

In steps from a step S901 through a step S903 of Fig. 12, upon receiving a notification of the correction factor C1 of compressor current and the correction factor C1 of refrigerant pressure from the calculation unit 105, the storage unit 106 records each correction factor C1, and notifies recording completion to the calculation unit 105.

In a step S804 of Fig. 8, there is a case wherein the operation data 201 obtained during train operation does not include the operation data 201 that meets all of four conditions that the atmospheric temperature 205 is equal to the laboratory temperature 306, the door opening/closing state 206 is closing, the vehicle occupancy rate 207 is 0%, and the running speed 208 is 0km/h. In such a case, for operation data 201 being different only in one condition, an approximate curve of state information corresponding to the one different condition is created, and state information in a case wherein the one condition is met is estimated. The "different one condition" is selected in accordance with a priority order determined beforehand. In the present embodiment, as the "different one condition," the atmospheric temperature 205 is selected first. A specific procedure is as follows.

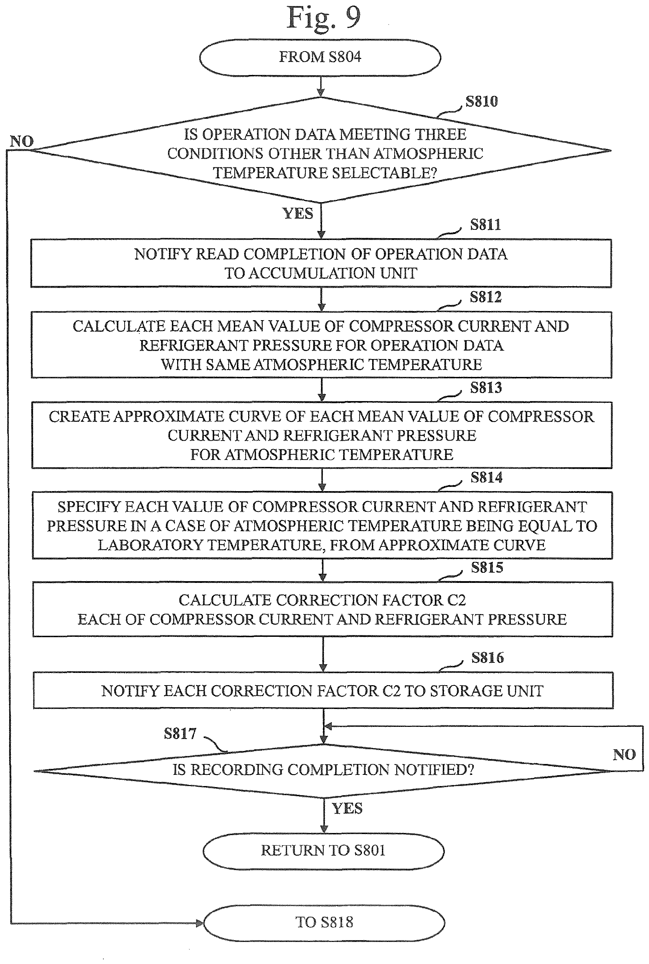

In a step S810 of Fig. 9, the calculation unit 105 identifies operation data 201 from the train operation 204 of the operation data 201 among the data accumulated by the accumulation unit 104, and selects operation data 201 wherein the door opening/closing state 206 is closing, the vehicle occupancy rate 207 is 0%, and the running speed 208 is Okm/h. Then, in a step S811 of Fig. 9, the calculation unit 105 notifies read completion to the accumulation unit 104. In the step S707 and the step S708 of Fig. 7, the accumulation unit 104 receives the notification of the read completion.

In a step S812 of Fig. 9, the calculation unit 105 calculates mean values respectively of the compressor current 209 and the refrigerant pressure 210 for operation data 201 with a same atmospheric temperature 205 among the operation data 201 selected.

In a step S813 of Fig. 9, the calculation unit 105 creates approximate curves of the mean values respectively of the compressor current 209 and the refrigerant pressure 210 for the atmospheric temperature 205.

The approximate curve is created by general linear approximation, exponential approximation, logarithmic approximation, polynomial approximation, or power approximation. A case having a highest R² value is selected. An R² value is a value between 0 and 1 representing how much an estimate value of the approximate curve is close to actual data.

In a step S814 of Fig. 9, the calculation unit 105 specifies values respectively of the compressor current and the refrigerant pressure in a case wherein an atmospheric temperature is equal to the laboratory temperature 306 from the approximate curve created. Then, in a step S815 of Fig. 9, the calculation unit 105 calculates a quotient of the compressor current 307 of the test data 301 and the value of the compressor current specified as a correction factor C2 of compressor current, and a quotient of the refrigerant pressure 308 of the test data 301 and the value of the refrigerant pressure specified as a correction factor C2 of refrigerant pressure.

In a step S816 of Fig. 9, the calculation unit 105 notifies each correction factor C2 to the storage unit 106.

In steps from a step S904 through a step S906 of Fig. 12, upon receiving a notification of the correction factor C2 of the compressor current and the correction factor C2 of the refrigerant pressure from the calculation unit 105, the storage unit 106 records each correction factor C2, and notifies recording completion to the calculation unit 105.

In a step S810 of Fig. 9, there is a case wherein the operation data 201 obtained during train operation does not include operation data 201 that meets all the three conditions that the door opening/closing state 206 is closing, the vehicle occupancy rate 207 is 0%, and the running speed 208 is Okm/h. In such a case, the vehicle occupancy rate 207 is selected secondarily as "one different condition." The concrete procedure is as follows.

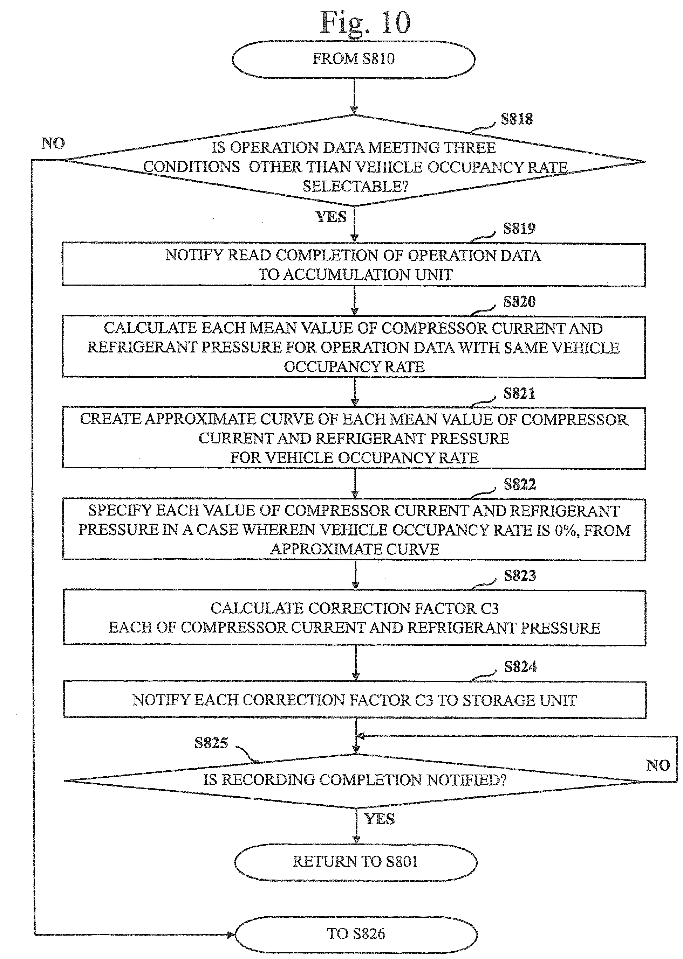

In a step S818 of Fig. 10, the calculation unit 105 identifies operation data 201 from the train operation 204 of the operation data 201 among the data accumulated by the accumulation unit 104, and selects operation data 201 wherein the atmospheric temperature 205 is equal to the laboratory temperature 306, the door opening/closing state 206 is closing, and the running speed 208 is Okm/h. Then, in a step S819 of Fig. 10, the calculation unit 105 notifies read completion to the accumulation unit 104. In the step S707 and the step S708 of Fig. 7, the accumulation unit 104 receives a notification of the read completion.

In a step S820 of Fig. 10, the calculation unit 105 calculates mean values respectively of the compressor current 209 and the refrigerant pressure 210 for operation data 201 with a same vehicle occupancy rate 207 among the operation data 201 selected.

In a step S821 of Fig. 10, the calculation unit 105 creates approximate curves of the mean values respectively of the compressor current 209 and the refrigerant pressure 210 for the vehicle occupancy rate 207.

In a step S822 of Fig. 10, the calculation unit 105 specifies values respectively of the compressor current and the refrigerant pressure in a case wherein the vehicle occupancy rate is 0% from the approximate curves created. Then, in a step S823 of Fig. 10, the calculation unit 105 calculates a quotient of the compressor current 307 of the test data 301 and the value of the compressor current specified as a correction factor C3 of the compressor current, and a quotient of the refrigerant pressure 308 of the test data 301 and the value of the refrigerant pressure specified as a correction factor C3 of the refrigerant pressure.

In a step S824 of Fig. 10, the calculation unit 105 notifies each correction factor C3 to the storage unit 106.

In steps from a step S907 through a step S909 of Fig. 12, upon receiving a notification of the correction factor C3 of the compressor current and the correction factor C3 of the refrigerant pressure from the calculation unit 105, the storage unit 106 records each correction factor C3, and notifies recording completion to the calculation unit 105.

In a step S818 of Fig. 10, there is a case wherein the operation data 201 obtained during train operation does not include operation data 201 that meets all the three conditions that the atmospheric temperature 205 is equal to the laboratory temperature 306, the door opening/closing state 206 is closing, and the running speed 208 is Okm/h. In such a case, the running speed 208 is selected thirdly as "one different condition." The specific procedure is as follows.

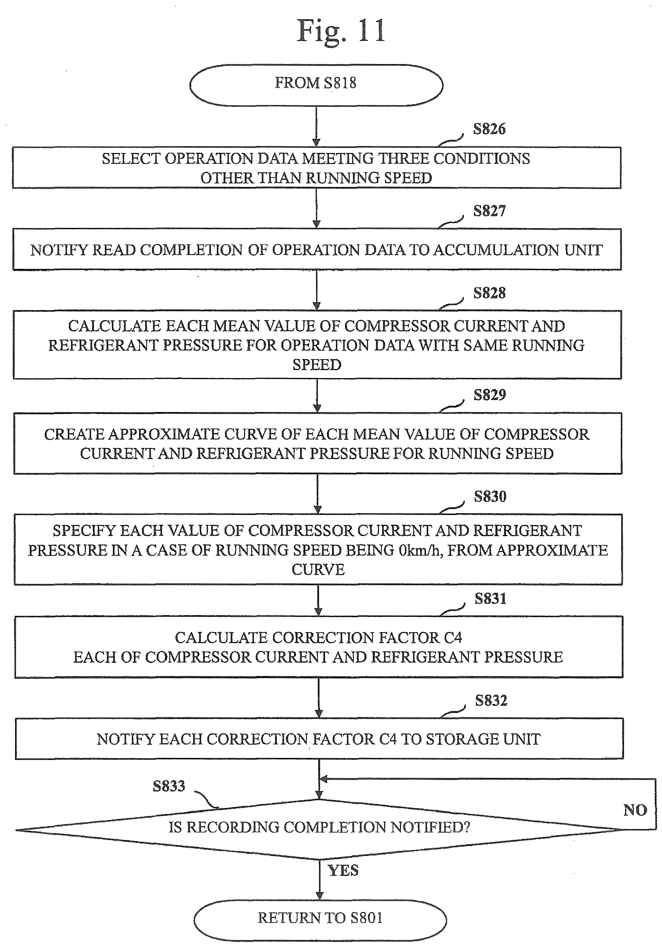

In a step S826 of Fig. 11, the calculation unit 105 identifies operation data 201 from the train operation 204 of the operation data 201 among the data accumulated by the accumulation unit 104, and selects operation data 201 wherein the atmospheric temperature 205 is equal to the laboratory temperature 306, the door opening/closing state 206 is closing, and the vehicle occupancy rate 207 is 0%. Then, in a step S827 of Fig. 11, the calculation unit 105 notifies read completion to the accumulation unit 104. In the step S707 and the step S708 of Fig. 7, the accumulation unit 104 receives a notification of the read completion.

In a step S828 of Fig. 11, the calculation unit 105 calculates mean values respectively of the compressor current 209 and the refrigerant pressure 210 for data of an equal running speed 208 among the operation data 201 selected.

In a step S829 of Fig. 11, the calculation unit 105 creates approximate curves of the mean values respectively of the compressor current 209 and the refrigerant pressure 210 for the running speed 208.

In a step S830 of Fig. 11, the calculation unit 105 specifies values respectively of the compressor current and the refrigerant pressure in a case wherein the running speed is 0km/h from the approximate curves created. Then, in a step S831 of Fig. 11, the calculation unit 105 calculates a quotient of the compressor current 307 of the test data 301 and the value of the compressor current specified as a correction factor C4 of the compressor current, and a quotient of the refrigerant pressure 308 of the test data 301 and the value of the refrigerant pressure specified as a correction factor C4 of the refrigerant pressure.

In a step S832 of Fig. 11, the calculation unit 105 notifies each correction factor C4 to the storage unit 106.

In steps from a step S910 through a step S912 of Fig. 12, upon receiving a notification of the correction factor C4 of the compressor current and the correction factor C4 of the refrigerant pressure from the calculation unit 105, the storage unit 106 records each correction factor C4 and notifies recording completion to the calculation unit 105.

In order to simplify explanation, in the step S826 of Fig. 11, it is supposed that there is no case wherein the operation data 201 obtained during train operation does not include operation data 201 that meets all the three conditions that the atmospheric temperature 205 is equal to the laboratory temperature 306, the door opening/closing state 206 is closing, and the vehicle occupancy rate 207 is 0%. When such a case exists, as described below, for operation data 201 wherein only two conditions are different, approximate curves of state information respectively of the different two conditions are created in stages, and state information in a case wherein these two conditions are met is estimated.

In an inspection of a train before business operation, by performing an operation check of the vehicle air conditioner, it is possible to make operation data 201 that meets all the three conditions that the door opening/closing state 206 is closing, the vehicle occupancy rate 207 is 0%, and the running speed 208 is 0km/h exist without fail. In such a case, it is possible to omit the steps from the step S818 through the step S833.

As described above, in the step S802, the calculation unit 105 obtains the test data 301. In the step S804, the step S806, the step S810, the steps from the step S812 through the step S814, the step S818, the steps from the step S820 through the step S822, the step S826 and the steps from the step S828 through the step S830, the calculation unit 105 estimates performance of the apparatus during an actual operation under an environmental condition the same as the environmental condition at the time of a test based on the operation data 201 accumulated by the accumulation unit 104. In the step S807, the step S815, the step S823 and the step S831, the calculation unit 105 calculates a correction factor being a ratio between an estimate performance value being the performance value obtained by estimation and a performance value before deterioration. The larger the accumulated amount of the operation data 201 used for estimation of the performance is, the more the accuracy of a correction factor that is calculated can be increased; however, in the present embodiment, it is possible to calculate a correction factor of a sufficient accuracy even with the accumulated amount in a short period of time of about six months to one year.

When there is operation data 201 wherein at least one condition value coincides with that of the test data 301 in the operation data 201 accumulated by the accumulation unit 104, in the step S806, the step S814, the step S822 and the step S830, the calculation unit 105 determines an estimate performance value based on the operation data 201 whereof at least one condition values coincide with one another, in the relevant operation data 201.

When there is operation data 201 wherein all the condition values coincide with those of the test data 301 among the operation data 201 accumulated by the accumulation unit 104, in the step S806, the calculation unit 105 determines as the estimate performance value an operation performance value included in the relevant operation data 201.

Meanwhile, when there is no operation data 201 wherein all the condition values coincide with those of the test data 301 in the operation data 201 accumulated by the accumulation unit 104, in the steps from the step S812 through the step S814, the steps from the step S820 through the step S822, and the steps from the step S828 through the step S830, the calculation unit 105 analyzes a correlation between the condition values included in the operation data 201 accumulated by the accumulation unit 104 and the operation performance value, and calculates an estimate performance value.

In the present embodiment, the operation data 201 accumulated by the accumulation unit 104 and the test data 301 and 401 respectively include a first condition value being the condition value indicating one type of an environmental condition. When there is no operation data 201 wherein the first condition value coincides with that of the test data 301 in the operation data 201 accumulated by the accumulation unit 104, in the step S814, in the step S822 and the step S830, the calculation unit 105 calculates an approximate value of an operation performance value corresponding to the first condition value included in the test data 301 as an estimate performance value on an approximate curve representing the correlation between the first condition value included in the operation data 201 accumulated by the accumulation unit 104 and the operation performance value.

As a concrete example, the atmospheric temperature 205 of the operation data 201 and the laboratory temperature 306 of the test data 301 respectively correspond to the first condition values. When there is no operation data 201 wherein the atmospheric temperature 205 coincides with the laboratory temperature 306 in the operation data 201 accumulated by the accumulation unit 104, in the step S814, the calculation unit 105 calculates an approximate value of compressor current corresponding to the laboratory temperature 306 included in the test data 301 as an estimate performance value on an approximate curve representing a correlation between the atmospheric temperature 20 included in the operation data 201 accumulated by the accumulation unit 104, and the compressor current 209. The calculation unit 105 also calculates an approximate value of refrigerant pressure corresponding to the laboratory temperature 306 included in the test data 301 as an estimate performance value on an approximate curve representing a correlation between the atmospheric temperature 205 included in the operation data 201 accumulated by the accumulation unit 104 and the refrigerant pressure 210.

Lastly, deterioration diagnosis of the vehicle air conditioner is performed.

In a step S507 and a step S508 of Fig. 5, the operation unit 102 notifies execution start to the diagnosis unit 107 when execution of the deterioration diagnosis is requested by using the operation screen.

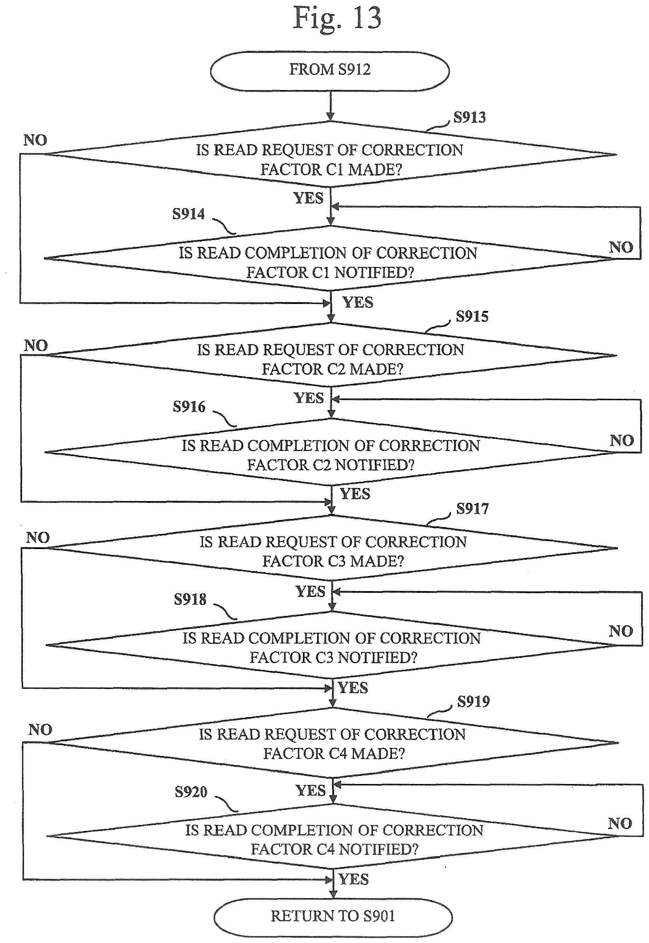

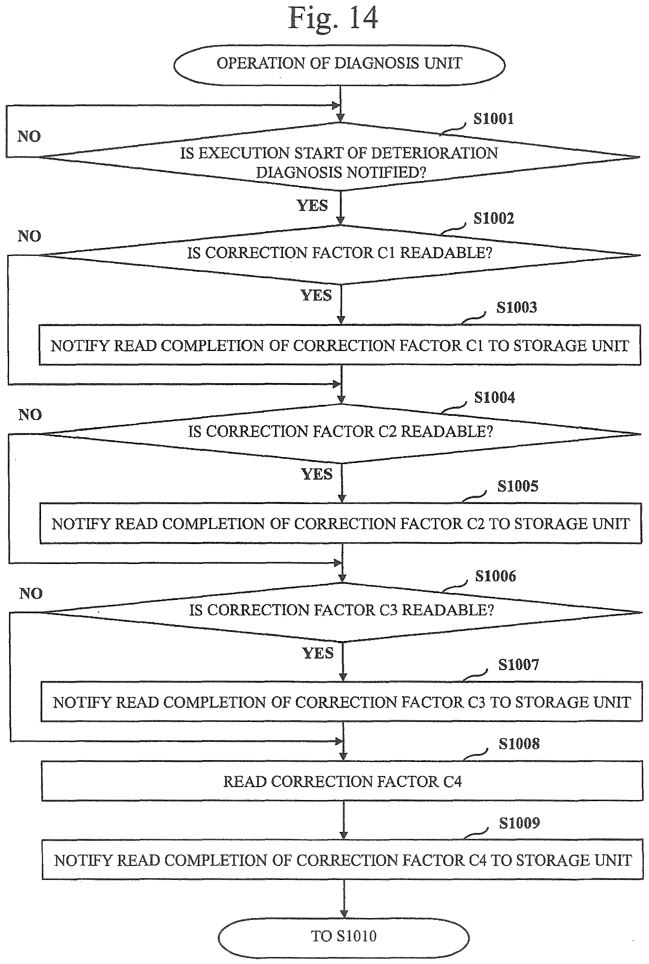

In steps from a step S1001 through a step S1003 of Fig. 14, upon receiving a notification of the execution start from the operation unit 102, the diagnosis unit 107 reads a correction factor C1 stored by the storage unit 106, and notifies read completion to the storage unit 106. In a step S913 and a step S914 of Fig. 13, the storage unit 106 receives the notification of the read completion.

In the step S1002 of Fig. 14, there is a case wherein the correction factor C1 is not stored. In such a case, in a step S1004 and a step S1005 of Fig. 14, the diagnosis unit 107 reads a correction factor C2 stored by the storage unit 106, and notifies read completion to the storage unit 106. In a step S915 and a step S916 of Fig. 13, the storage unit 106 receives the notification of the read completion.

In the step S1004 of Fig. 14, there is a case wherein the correction factor C2 i not stored. In such a case, in a step S1006 and a step S1007 of Fig. 14, the diagnosis unit 107 reads a correction factor C3 stored by the storage unit 106, and notifies read completion to the storage unit 106. In a step S917 and a step S918 of Fig. 13, the storage unit 106 receives the notification of the read completion.

In the step S1006 of Fig. 14, there is a case wherein the correction factor C3 is not stored. In such a case, in a step S1008 and a step S1009 of Fig. 14, the diagnosis unit 107 reads a correction factor C4 stored by the storage unit 106, and notifies read completion to the storage unit 106. In a step S919 and a step S920 of Fig. 13, the storage unit 106 receives the notification of the read completion.

In order to simplify explanation, in the step S1008 of Fig. 14, it is supposed that there is no case wherein the correction factor C4 is not stored.

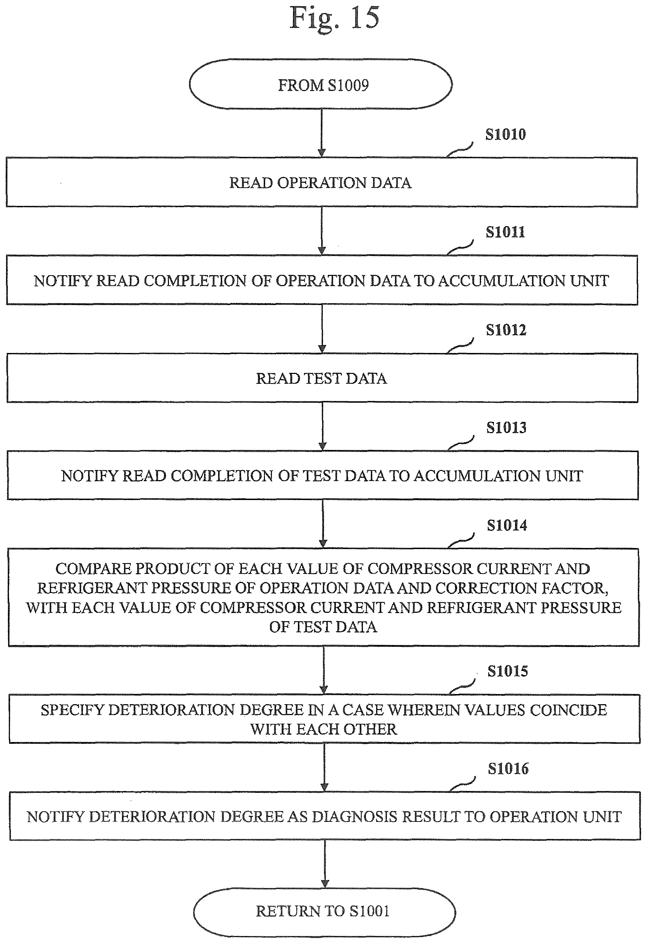

In a step S1010 and a step S1011 of Fig. 15, the diagnosis unit 107 identifies operation data 201 from the train operation 204 of the operation data 201 among the data accumulated by the accumulation unit 104, reads the operation data 201, and notifies read completion to the accumulation unit 104. In the step S707 and the step S708 of Fig. 7, the accumulation unit 104 receives the notification of the read completion.

By the data read in the manner as described above, state information obtained during train operation is corrected.

In a step S1012 and a step S1013 of Fig. 15, the diagnosis unit 107 identifies the test data 401 from the shipping test 404 and the deterioration state 405 of the test data 401 among the data accumulated by the accumulation unit 104, reads the test data 401 and notifies read completion to the accumulation unit 104. In a step S711 and a step S712 of Fig. 7, the accumulation unit 104 receives the notification of the read completion.

In a step S1014 of Fig. 15, the diagnosis unit 107 calculates the product of the compressor current 209 of the operation data 201 and the correction factor of the compressor current read. Then, the diagnosis unit 107 compares the product with the compressor current 407 of the test data 401. Further, the diagnosis unit 107 calculates a product of the refrigerant pressure 210 of the operation data 201 and the correction factor of the refrigerant pressure read. Then, the diagnosis unit 107 compares the product with the refrigerant pressure 408 of the test data 401.

In a step S1015 and a step S1016 of Fig. 15, the diagnosis unit 107 notifies, as a diagnosis result, a deterioration degree 409 in a case wherein values coincide with each other as a result of comparison to the operation unit 102.

In a step S509 and a step S510 of Fig, 5, the operation unit 102 displays the diagnosis result on the operation screen when the notification of the diagnosis result is received from the diagnosis unit 107.

As described above, in a step S1010, the diagnosis unit 107 obtains new operation data 201. In a step S1016 and a step S1017, the diagnosis unit 107 compares one performance value of an operation performance value included in the new operation data 201 and a performance value after deterioration with a product of the other performance value and a correction factor, so as to perform a deterioration diagnosis of the apparatus. In the present embodiment, the calculation unit 105 calculates the correction factor by dividing the performance value before deterioration by the estimate performance value. Therefore, the diagnosis unit 107 performs a deterioration diagnosis of the apparatus by comparing the performance value after deterioration with the product of the operation performance value included in the new operation data 201 and the correction factor, and. As a variation, the calculation unit 105 may calculate a correction factor by dividing the estimate performance value by the performance value before deterioration. In such a case, the diagnosis unit 107 performs a deterioration diagnosis of the apparatus by comparing the operation performance value included in the new operation data 201 with the product of the performance value after deterioration and the correction factor.

As described above, in the step S804, there is a case wherein the operation data 201 obtained during train operation does not include operation data 201 that meets all four conditions that the atmospheric temperature 205 is equal to the laboratory temperature 306, the door opening/closing state 206 is closing, the vehicle occupancy rate 207 is 0%, and the running speed 208 is Okm/h. In such a case, by taking operation data 201 wherein only one condition is different as an object, an approximate curve of state information for the one different condition is created, and state information in a case wherein the one condition is met is estimated. However, as a variation, it is here assumed that there is no operation data 201 wherein the number of different conditions is only one. In this example, by taking operation data 201 wherein only two conditions are different as an object, approximate curves of state information respectively for the different two conditions are created in stages, and state information in a case wherein those two conditions are met is estimated. The "different two conditions" are selected in accordance with a priority determined beforehand. Here, as the "different two conditions," a combination of the atmospheric temperature 205 and a vehicle occupancy rate 207 is selected first. The concrete procedure is as follows.

First, the calculation unit 105 identifies operation data 201 from the train operation 204 of the operation data 201 among the data accumulated by the accumulation unit 104, and selects operation data 201 wherein the door opening/closing state 206 is closing, the vehicle occupancy rate 207 is 10%, and the running speed 208 is 0km/h.

As well as the process of the step S812, the calculation unit 105 calculates mean values respectively of the compressor current 209 and the refrigerant pressure 210 for operation data 201 with a same atmospheric temperature 205 among the operation data selected.

As well as the process of the step S813, the calculation unit 105 creates approximate curves of mean values respectively of the compressor current 209 and the refrigerant pressure 210 for the atmospheric temperature 205.

As well as the process of the step S814, the calculation unit 105 specifies values respectively of compressor current and refrigerant pressure in a case wherein the atmospheric temperature is equal to the laboratory temperature 306 from the approximate curves created.

As described above, the calculation unit 105 calculates values respectively of compressor current and refrigerant pressure in a case wherein the atmospheric temperature is equal to the laboratory temperature 306 corresponding to a case wherein the vehicle occupancy rate 207 is 10%, by using the operation data 201 wherein the vehicle occupancy rate 207 is 10%. The calculation unit 105 calculates values respectively of compressor current and refrigerant pressure in a case wherein the atmospheric temperature is equal to the laboratory temperature 306 not only for a case wherein the vehicle occupancy rate 207 is 10 %, but also in cases wherein the vehicle occupancy rate 207 is 20%, 30%, ..., and 100%. The vehicle occupancy rate 207 may be set not in increments of 10%, but may be set in other increments, such as in increments of 1 %, etc.

Next, the calculation unit 105 creates approximate curves of values respectively of compressor current and refrigerant pressure for the vehicle occupancy rate 207 from the values respectively of the compressor current and the refrigerant pressure calculated as described above.

As well as the process of the step S814, the calculation unit 105 specifies values respectively of compressor current and refrigerant pressure in a case wherein the vehicle occupancy rate 207 is 0% from the approximate curves created. Then, as well as the process of the step S815, the calculation unit 105 calculates a quotient of the compressor current 307 of the test data 301 and the value of the compressor current specified as a correction factor C5 of compressor current, and a quotient of the refrigerant pressure 308 of the test data 301 and the value of the refrigerant pressure specified as a correction factor C5.

The correction factors C5 can be used for a deterioration diagnosis of a vehicle air conditioner as well as the correction factors C1, C2, C3 and C4.

The operation data 201 accumulated by the accumulation unit 104, and the test data 301 and 401 respectively include condition values from a first condition value through a Nth condition value being condition values indicating different types of environmental conditions, N being an integer greater than one. When there is no operation data 201 wherein at least any of the condition values from the first condition value through a Mth condition value coincides with those of the test data 301 in the operation data 201 accumulated by the accumulation unit 104, by taking M as an integer equal to N, the calculation unit 105 groups operation data 201 wherein combinations of the condition values from the first condition value through a M-1th condition value coincides with one another among the operation data 201 accumulated by the accumulation unit 104. The calculation unit 105 performs a process to calculate approximate values of an operation performance value corresponding to the Mth condition value included in the test data 301 for each group on an approximate curve representing correlations between the Mth condition values included in the operation data 201 of each group and the operation performance value. Then, by taking M as an integer being decremented by one, the calculation unit 105 performs the process described above repeatedly until M becomes 1. The calculation unit 105 calculates an approximate value of the operation performance value corresponding to the first condition value included in the test data 301 as an estimate performance value on an approximate curve representing correlations between the first condition values included in the operation data 201 of each group in the last grouping and the approximate values of the operation performance value calculated for each group.

As a concrete example, the vehicle occupancy rate 207 of the operation data 201 and the vehicle occupancy rate of the test data 301 respectively correspond to the first condition values. It is supposed that a value of the vehicle occupancy rate in a shipping test is implicitly included in the test data 301 by assuming that the value of the vehicle occupancy rate is 0%, although the test data 301 does not explicitly include the value of the vehicle occupancy rate. The atmospheric temperature 205 of the operation data 201 and the laboratory temperature 306 of the test data 301 respectively correspond to second condition values. When the operation data 201 accumulated by the accumulation unit 104 does not include operation data 201 wherein at least any of the vehicle occupancy rate 207 and the atmospheric temperature 205 coincides with that of the test data 301, the calculation unit 105 groups operation data 201 wherein the vehicle occupancy rates 207 coincide with one another in the operation data 201 accumulated by the accumulation unit 104. The calculation unit 105 performs a process to calculate approximate values of compressor current corresponding to the laboratory temperature 306 included in the test data 301 for each group on an approximate curve representing correlations between the vehicle occupancy rates 207 included in the operation data of each group and the compressor current 209. The calculation unit 105 also performs a process to calculate approximate values of refrigerant pressure corresponding to the laboratory temperature 306 included in the test data 301 for each group on an approximate curve representing correlations between the vehicle occupancy rates 207 included in the operation data 201 of each group and the refrigerant pressure 210. The calculation unit 105 calculates approximate values of the operation performance value corresponding to a vehicle occupancy rate included in the test data 301 as estimate performance values on an approximate curve representing correlations between the vehicle occupancy rates included in the operation data 201 of each group in the last grouping and the approximate values of the compressor current calculated. The calculation unit 105 calculates approximate values of refrigerant pressure corresponding to a vehicle occupancy rate included in the test data 301 as estimate performance values on an approximate curve representing correlations between the vehicle occupancy rates included in the operation data 201 of each group in the last grouping and the approximate values of the refrigerant pressure calculated for each group.

### ***Explanation of Effect of Embodiment***

In the present embodiment, the performance of a vehicle air conditioner during actual operation under an environmental condition the same as an environmental condition at the time of a test is estimated. Then, in accordance with the performance estimated, a correction factor being a criterion value to perform a deterioration diagnosis by using data indicating a deterioration state is calculated. Thus, it is possible to decrease the time required for calculation of the correction factor.

In the present embodiment, by additionally acquiring state information by simulating a deterioration state of a vehicle air conditioner at the time of a shipping test, and correcting the state information acquired at the time of train operation so as to meet a measurement condition at the time of the shipping test, it is possible to perform a deterioration diagnosis based on the state information indicating the deterioration state acquired in the shipping test.

### ***Other Configuration***

In the present embodiment, the functions of the operation unit 102, the reception unit 103, the accumulation unit 104, the calculation unit 105, the storage unit 106 and the diagnosis unit 107 may be realized by software; however, as a variation, the functions of the operation unit 102, the reception unit 103, the accumulation unit 104, the calculation unit 105, the storage unit 106 and the diagnosis unit 107 may be realized by a combination of software and hardware. That is, a part of the functions of the operation unit 102, the reception unit 103, the accumulation unit 104, the calculation unit 105, the storage unit 106 and the diagnosis unit 107 may be realized by dedicated electronic circuits, and the rest may be realized by software.

The dedicated electronic circuits are, for example, single circuits, combined circuits, processors made into programs, processors made into parallel programs, logic integrated circuits (logic ICs), GAs, FPGAs, or ASICs. "GA" is an abbreviation for "gate array." "FPGA" is an abbreviation for "field-programmable gate array." "ASIC" is an abbreviation for "application specific integrated circuit."

The processor 111, the memory 112 and the dedicated electronic circuits are collectively referred to as "processing circuitry." That is, regardless of whether the functions of the operation unit 102, the reception unit 103, the accumulation unit 104, the calculation unit 105, the storage unit 106 and the diagnosis unit 107 are realized by software, or realized by a combination of software and hardware, the functions of the operation unit 102, the reception unit 103, the accumulation unit 104, the calculation unit 105, the storage unit 106 and the diagnosis unit 107 are realized by processing circuitry.

### Reference Signs List

101: deterioration diagnosis device; 102: operation unit; 103: reception unit; 104: accumulation unit; 105: calculation unit; 106: storage unit; 107: diagnosis unit; 111: processor; 112: memory; 113: display interface; 114: communication interface; 201: operation data; 202: apparatus ID; 203: time; 204: train operation; 205: atmospheric temperature; 206: door opening/closing state; 207: vehicle occupancy rate; 208: running speed; 209: compressor current; 210: refrigerant pressure; 301: test data; 302: apparatus ID; 303: time; 304: shipping test; 305: normal state; 306: laboratory temperature; 307: compressor current; 308: refrigerant pressure; 401: test data; 402: apparatus ID; 403: time; 404: shipping test; 405: deterioration state; 406: laboratory temperature; 407: compressor current; 408: refrigerant pressure; 409: deterioration degree

## Claims

1. A deterioration diagnosis system for a vehicle air conditioner of a train, the deterioration diagnosis system comprising:
an accumulation unit (104) configured to accumulate operation data (201) including an operation performance value being a performance value obtained by measuring a performance of the vehicle air conditioner during actual operation, and a condition value indicating an environmental condition during the actual operation;
a calculation unit (105) configured to acquire test data (301) including a performance value before deterioration being a performance value obtained by testing a performance of the vehicle air conditioner before deterioration, and a condition value indicating an environmental condition at a testing time, to select operation data including an environmental condition the same as or similar to the environmental condition at the testing time from the operation data accumulated in the accumulation unit, and to calculate a correction factor from an operation performance value included in the operation data selected and the performance value before deterioration; and
a diagnosis unit (107) configured to acquire new operation data (201), and to perform a deterioration diagnosis of the vehicle air conditioner based on an operation performance value included in the new operation data and the correction factor.

2. The deterioration diagnosis system as defined in claim 1, wherein the diagnosis unit (107) is further configured to perform a deterioration diagnosis by using a performance value after deterioration obtained by testing a performance of the vehicle air conditioner after a simulated deterioration.

3. The deterioration diagnosis system as defined in claim 2, wherein the diagnosis unit (107) is configured to perform a deterioration diagnosis by comparing one performance value of an operation performance value included in the new operation data and the performance value after deterioration with a product of another performance value and the correction factor.

4. The deterioration diagnosis system as defined in any one of claim 1 through claim 3, wherein the calculation unit (105) is configured to estimate the performance of the vehicle air conditioner during the actual operation under an environmental condition the same as or similar to the environmental condition at the testing time, and to calculate a correction factor from an estimate performance value being the performance value obtained by estimation, instead of the operation performance value included in the operation data selected, and the performance value before deterioration.

5. The deterioration diagnosis system as defined in claim 4, wherein the calculation unit (105) is configured to determine the estimate performance value, when operation data wherein at least one condition value coincides with that of the test data exists in the operation data accumulated by the accumulation unit, based on the operation data wherein the at least one condition value coincides with each other in the operation data existing.

6. The deterioration diagnosis system as defined in claim 4 or claim 5, wherein the calculation unit (105) is configured to calculate the estimate performance value, when operation data wherein all condition values coincide with those of the test data does not exist in the operation data accumulated by the accumulation unit, by analyzing a correlation between condition values included in the operation data accumulated by the accumulation unit and an operation performance value.

7. The deterioration diagnosis system as defined in any one of claim 4 through claim 6, wherein
the operation data accumulated by the accumulation unit and the test data include a first condition value being a condition value indicating one kind of an environmental condition, and
the calculation unit (105) is configured to calculate, when operation data wherein the first condition value coincides with that of the test data does not exist in the operation data accumulated by the accumulation unit, an approximate value of an operation performance value corresponding to the first condition value included in the test data as the estimate performance value on an approximate curve representing a correlation between the first condition value included in the operation data accumulated by the accumulation unit and an operation performance value.

8. The deterioration diagnosis system as defined in any one of claim 4 through claim 7, wherein the operation data accumulated by the accumulation unit and the test data respectively include condition values from a first condition value through a Nth condition value being condition values indicating environmental conditions mutually different in kind, N being an integer greater than one, and
the calculation unit (105) is configured to group, when operation data wherein at least one of a first condition value through a Mth condition value coincides with that of the test data does not exist in the operation data accumulated by the accumulation unit, by taking M as an integer equal to N, operation data wherein a combination of condition values from the first condition value through the M-lth condition value coincides with each other in the operation data accumulated by the accumulation unit, to perform a process to calculate an approximate value of an operation performance value corresponding to the Mth condition value included in the test data for each group on an approximate curve representing a correlation between the Mth condition value included in the operation data of each group and an operation performance value, and by taking M as an integer being decremented by one, to repeatedly perform the process until M becomes 1, and to calculate an approximate value of an operation performance value corresponding to the first condition value included in the test data as the estimate performance value, on an approximate curve representing a correlation between the first condition value included in the operation data of each group in the last grouping and the approximate value of the operation performance value calculated for each group.

9. The deterioration diagnosis system as defined in any one of claim 4 through claim 8, wherein
the calculation unit (105) is configured to calculate the correction factor by dividing the performance value before deterioration by either one of the operation performance value included in the operation data selected and the estimate performance value, and
the diagnosis unit (107) is configured to compare the performance value after deterioration with a product of the operation performance value included in the new operation data and the correction factor, and to perform a deterioration diagnosis of the vehicle air conditioner.

10. The deterioration diagnosis system as defined in any one of claim 4 through claim 9, wherein
the calculation unit (105) is configured to calculate the correction factor by dividing either one of the operation performance value included in the operation data selected and the estimate performance value by the performance value before deterioration, and
the diagnosis unit (107) is configured to compare the operation performance value included in the new operation data, and a product of the performance value after deterioration and the correction factor, and to perform a deterioration diagnosis of the vehicle air conditioner.

11. A deterioration diagnosis method for a vehicle air conditioner of a train comprising a system according to claim 1, the deterioration diagnosis method comprising:
by an accumulation unit (104), accumulating operation data including an operation performance value being a performance value obtained by measuring a performance of the vehicle air conditioner during actual operation, and a condition value indicating an environmental condition during the actual operation;
by a calculation unit (105), acquiring test data including a performance value before deterioration being a performance value obtained by testing a performance of the vehicle air conditioner before deterioration, and a condition value indicating an environmental condition at a testing time, selecting operation data including an environmental condition the same as or similar to the environmental condition at the testing time from the operation data accumulated in the accumulation unit, and calculating a correction factor from an operation performance value included in the operation data selected and the performance value before deterioration; and
by a diagnosis unit (107), acquiring new operation data, and performing a deterioration diagnosis of the vehicle air conditioner based on an operation performance value included in the new operation data and the correction factor.

12. A deterioration diagnosis program for a vehicle air conditioner of a train to make a computer execute a method according to claim 11, wherein the computer accumulates, in a memory, operation data including an operation performance value being a performance value obtained by measuring a performance of the vehicle air conditioner during actual operation, and a condition value indicating an environmental condition during the actual operation, perform:
a process to acquire test data including a performance value before deterioration being a performance value obtained by testing a performance of the vehicle air conditioner before deterioration, and a condition value indicating an environmental condition at a testing time, to select operation data including an environmental condition the same as or similar to the environmental condition at the testing time from the operation data accumulated in the memory, and to calculate a correction factor from an operation performance value included in the operation data selected and the performance value before deterioration; and
a process to acquire new operation data, and to perform a deterioration diagnosis of the vehicle air conditioner based on an operation performance value included in the new operation data and the correction factor.

## Patentansprüche

1. Verschlechterungsdiagnosesystem für eine Fahrzeugklimaanlage eines Zuges, wobei das Verschlechterungsdiagnosesystem umfasst:
eine Akkumulationseinheit (104), die zum Akkumulieren von Betriebsdaten (201) eingerichtet ist, die einen Betriebsleistungswert, der ein Leistungswert ist, der durch Messen einer Leistung der Fahrzeugklimaanlage während des tatsächlichen Betriebs erhalten wird, und einen Bedingungswert, der eine Umgebungsbedingung während des tatsächlichen Betriebs anzeigt, aufweisen;
eine Berechnungseinheit (105), die eingerichtet ist, Testdaten (301) zu berechnen, die einen Leistungswert vor Verschlechterung, der ein Leistungswert ist, der durch Testen einer Leistung der Fahrzeugklimaanlage vor Verschlechterung erhalten wird, und einen Bedingungswert, der eine Umgebungsbedingung zu einer Testzeit anzeigt, aufweisen, Betriebsdaten aus den in der Akkumulationseinheit akkumulierten Betriebsdaten auszuwählen, die eine Umgebungsbedingung aufweisen, die gleich oder ähnlich der Umgebungsbedingung zu der Testzeit ist, und einen Korrekturfaktor aus einem Betriebsleistungswert, der in den ausgewählten Betriebsdaten enthalten ist, und dem Leistungswert vor Verschlechterung zu berechnen; und
eine Diagnoseeinheit (107), die eingerichtet ist, neue Betriebsdaten (201) zu beschaffen und eine Verschlechterungsdiagnose der Fahrzeugklimaanlage auf Grundlage eines Betriebsleistungswertes, der in den neuen Betriebsdaten enthalten ist, und des Korrekturfaktors durchzuführen.

2. Verschlechterungsdiagnosesystem gemäß Anspruch 1, wobei die Diagnoseeinheit (107) ferner eingerichtet ist, eine Verschlechterungsdiagnose unter Verwendung eines Leistungswertes nach Verschlechterung durchzuführen, der durch Testen einer Leistung der Fahrzeugklimaanlage nach einer simulierten Verschlechterung erhalten wird.

3. Verschlechterungsdiagnosesystem gemäß Anspruch 2, wobei die Diagnoseeinheit (107) eingerichtet ist, eine Verschlechterungsdiagnose durch Vergleichen eines Leistungswertes eines Betriebsleistungswertes, der in den neuen Betriebsdaten enthalten ist, und des Leistungswertes nach Verschlechterung mit einem Produkt aus einem anderen Leistungswert und dem Korrekturfaktor durchzuführen.

4. Verschlechterungsdiagnosesystem gemäß einem von Anspruch 1 bis Anspruch 3, wobei die Berechnungseinheit (105) eingerichtet ist, die Leistung der Fahrzeugklimaanlage während des tatsächlichen Betriebs unter einer Umgebungsbedingung zu schätzen, die gleich oder ähnlich wie die Umgebungsbedingung zu der Testzeit ist, und einen Korrekturfaktor aus einem Schätzleistungswert, der der durch Schätzung erhaltene Leistungswert ist, anstelle des Betriebsleistungswertes, der in den ausgewählten Betriebsdaten enthalten ist, und den Leistungswert vor der Verschlechterung zu berechnen.

5. Verschlechterungsdiagnosesystem gemäß Anspruch 4, wobei die Berechnungseinheit (105) eingerichtet ist, auf Grundlage der Betriebsdaten den Schätzleistungswert zu bestimmen, wenn Betriebsdaten, bei denen zumindest ein Bedingungswert mit dem der Testdaten übereinstimmt, in den durch die Akkumulationseinheit akkumulierten Betriebsdaten existieren, bei denen der zumindest eine Bedingungswert mit den existierenden Betriebsdaten übereinstimmt.

6. Verschlechterungsdiagnosesystem gemäß Anspruch 4 oder Anspruch 5, wobei die Berechnungseinheit (105) eingerichtet ist, den Schätzleistungswert, wenn Betriebsdaten, bei denen alle Bedingungswerte mit denen der Testdaten, die nicht in den durch die Akkumulationseinheit akkumulierten Betriebsdaten existieren, übereinstimmen, durch Analysieren einer Übereinstimmung zwischen Bedingungswerten, die in den durch die Akkumulationseinheit akkumulierten Betriebsdaten enthalten sind, und einen Betriebsleistungswert zu berechnen.

7. Verschlechterungsdiagnosesystem gemäß einem von Anspruch 4 bis Anspruch 6, wobei
die durch die Akkumulationseinheit akkumulierten Betriebsdaten und die Testdaten einen ersten Bedingungswert aufweisen, der ein Bedingungswert ist, der eine Art einer Umgebungsbedingung anzeigt, und
die Berechnungseinheit (105) eingerichtet ist, wenn Betriebsdaten, bei denen der erste Bedingungswert mit dem der Testdaten übereinstimmt, nicht in den durch die Akkumulationseinheit akkumulierten Betriebsdaten existieren, einen Annäherungswert eines Betriebsleistungswertes zu berechnen, der dem ersten Bedingungswert entspricht, der in den Testdaten als der Schätzleistungswert auf einer Annäherungskurve enthalten ist, die eine Korrelation zwischen dem ersten Bedingungswert, der in den durch die Akkumulationseinheit akkumulierten Betriebsdaten enthalten ist, und einem Betriebsleistungswert darstellt.

8. Verschlechterungsdiagnosesystem gemäß einem von Anspruch 4 bis Anspruch 7, wobei die durch die Akkumulationseinheit akkumulierten Betriebsdaten und die Testdaten jeweils Bedingungswerte von einem ersten Bedingungswert zu einem Nten Bedingungswert aufweisen, die Bedingungswerte sind, die Umgebungsbedingungen anzeigen, die sich in ihrer Art gegenseitig unterscheiden, wobei N eine ganze Zahl größer eins ist, und
die Berechnungseinheit (105) eingerichtet ist, wenn Betriebsdaten, bei denen zumindest einer eines ersten Bedingungswertes bis zu einem Mten Bedingungswert mit dem der Testdaten übereinstimmt, nicht in den durch die Akkumulationseinheit akkumulierten Betriebsdaten existieren, durch Annehmen von M als eine ganze Zahl gleich N, Betriebsdaten zu gruppieren, bei denen eine Kombination von Bedingungswerten vom ersten Bedingungswert bis zum M-1ten Bedingungswert miteinander in den durch die Akkumulationseinheit akkumulierten Betriebsdaten übereinstimmt, einen Prozess zum Berechnen eines Annäherungswertes eines Betriebsleistungswertes durchzuführen, der dem Mten Bedingungswert entspricht, der in den Testdaten für jede Gruppe auf einer Annäherungskurve enthalten ist, die eine Korrelation zwischen dem Mten Bedingungswert, der in den Betriebsdaten jeder Gruppe enthalten ist, und einem Betriebsleistungswert darstellt, und durch Annehmen von M als ganze Zahl, die um eins verringert ist, wiederholt den Prozess durchzuführen bis M 1 wird, und einen Annäherungswert eines Betriebsleistungswertes, der dem ersten Bedingungswert entspricht, der in den Testdaten als die Schätzleistungsdaten enthalten ist, auf einer Annäherungskurve zu berechnen, die eine Korrelation zwischen dem ersten Bedingungswert, der in den Betriebsdaten jeder Gruppe in der letzten Gruppierung enthalten ist, und dem Annäherungswert des für jede Gruppe berechneten Betriebsleistungswertes darstellt.

9. Verschlechterungsdiagnosesystem gemäß einem von Anspruch 4 bis Anspruch 8, wobei
die Berechnungseinheit (105) eingerichtet ist, den Korrekturfaktor durch Teilen des Leistungswertes vor Verschlechterung durch entweder den Betriebsleistungswert, der in den ausgewählten Betriebsdaten enthalten ist, oder den Schätzleistungswert zu berechnen, und
die Diagnoseeinheit (107) eingerichtet ist, den Leistungswert nach Verschlechterung mit einem Produkt aus dem Betriebsleistungswert, der in den neuen Betriebsdaten enthalten ist, und dem Korrekturfaktor zu vergleichen, und eine Verschlechterungsdiagnose der Fahrzeugklimaanlage durchzuführen.

10. Verschlechterungsdiagnosesystem gemäß einem von Anspruch 4 bis Anspruch 9, wobei
die Berechnungseinheit (105) eingerichtet ist, den Korrekturfaktor durch Teilen eines des Betriebsleistungswertes, der in den ausgewählten Betriebsdaten enthalten ist, und des Schätzleistungswertes durch den Leistungswert vor Verschlechterung zu berechnen, und
die Diagnoseeinheit (107) eingerichtet ist, den Betriebsleistungswert, der in den neuen Betriebsdaten enthalten ist, und ein Produkt aus dem Leistungswert nach Verschlechterung und dem Korrekturfaktor zu vergleichen, und eine Verschlechterungsdiagnose der Fahrzeugklimaanlage durchzuführen.

11. Verschlechterungsdiagnoseverfahren für eine Fahrzeugklimaanlage eines Zuges, ein System nach Anspruch 1 umfassend, wobei das Verschlechterungsdiagnoseverfahren umfasst:
durch eine Akkumulationseinheit (104), Akkumulieren von Betriebsdaten, die einen Betriebsleistungswert, der ein Leistungswert ist, der durch Messen einer Leistung der Fahrzeugklimaanlage während des tatsächlichen Betriebs erhalten wird, und einen Bedingungswert, der eine Umgebungsbedingung während des tatsächlichen Betriebs anzeigt, aufweisen;
durch eine Berechnungseinheit (105), Beschaffen von Testdaten, die einen Leistungswert vor Verschlechterung, der ein Leistungswert ist, der durch Testen einer Leistung der Fahrzeugklimaanlage vor Verschlechterung erhalten wird, und einen Bedingungswert, der eine Umgebungsbedingung zu einer Testzeit anzeigt, aufweisen, Auswählen, aus den in der Akkumulationseinheit akkumulierten Betriebsdaten, von Betriebsdaten, die eine Umgebungsbedingung aufweisen, die gleich oder ähnlich der Umgebungsbedingung zu der Testzeit ist, und Berechnen eines Korrekturfaktors aus einem Betriebsleistungswert, der in den ausgewählten Betriebsdaten enthalten ist, und dem Leistungswert vor Verschlechterung; und
durch eine Diagnoseeinheit (107), Beschaffen neuer Betriebsdaten und Durchführen einer Verschlechterungsdiagnose der Fahrzeugklimaanlage auf Grundlage eines Betriebsleistungswertes, der in den neuen Betriebsdaten enthalten ist, und des Korrekturfaktors.

12. Verschlechterungsdiagnoseprogramm für eine Fahrzeugklimaanlage eines Zuges, um einen Computer zu veranlassen, ein Verfahren nach Anspruch 11 auszuführen,
wobei der Computer in einem Speicher Betriebsdaten akkumuliert, die einen Betriebsleistungswert, der ein Leistungswert ist, der durch Messen einer Leistung der Fahrzeugklimaanlage während des tatsächlichen Betriebs erhalten wird, und einen Bedingungswert, der eine Umgebungsbedingung während des tatsächlichen Betriebs anzeigt, aufweisen, führt durch:
einen Prozess, um Testdaten zu beschaffen, die einen Leistungswert vor Verschlechterung, der ein Leistungswert ist, der durch Testen einer Leistung der Fahrzeugklimaanlage vor Verschlechterung erhalten wird, und einen Bedingungswert, der eine Umgebungsbedingung zu einer Testzeit anzeigt, aufweisen, Betriebsdaten aus den in der Akkumulationseinheit akkumulierten Betriebsdaten, die eine Umgebungsbedingung aufweisen, die gleich oder ähnlich der Umgebungsbedingung zu der Testzeit ist, auszuwählen, und einen Korrekturfaktor aus einem Betriebsleistungswert, der in den ausgewählten Betriebsdaten enthalten ist, und dem Leistungswert vor Verschlechterung zu berechnen; und
einen Prozess, um neue Betriebsdaten zu beschaffen und eine Verschlechterungsdiagnose der Fahrzeugklimaanlage auf Grundlage eines Betriebsleistungswertes, der in den neuen Betriebsdaten enthalten ist, und des Korrekturfaktors durchzuführen.

## Revendications

1. Système de diagnostic de détérioration pour un climatiseur de véhicule d'un train, le système de diagnostic de détérioration comprenant :
une unité d'accumulation (104) configurée de manière à accumuler des données de fonctionnement (201) incluant une valeur de performance de fonctionnement correspondant à une valeur de performance obtenue en mesurant une performance du climatiseur de véhicule au cours d'un fonctionnement effectif, et une valeur de condition indiquant une condition environnementale au cours du fonctionnement effectif ;
une unité de calcul (105) configurée de manière à acquérir des données d'essai (301) incluant une valeur de performance avant détérioration correspondant à une valeur de performance obtenue en mettant à l'essai une performance du climatiseur de véhicule avant détérioration, et une valeur de condition indiquant une condition environnementale à un instant d'essai, à sélectionner des données de fonctionnement incluant une condition environnementale identique ou similaire à la condition environnementale à l'instant d'essai, à partir des données de fonctionnement accumulées dans l'unité d'accumulation, et à calculer un facteur de correction à partir d'une valeur de performance de fonctionnement incluse dans les données de fonctionnement sélectionnées et de la valeur de performance avant détérioration ; et
une unité de diagnostic (107) configurée de manière à acquérir de nouvelles données de fonctionnement (201), et à mettre en œuvre un diagnostic de détérioration du climatiseur de véhicule sur la base d'une valeur de performance de fonctionnement incluse dans les nouvelles données de fonctionnement et du facteur de correction.

2. Système de diagnostic de détérioration selon la revendication 1, dans lequel l'unité de diagnostic (107) est en outre configurée de manière à mettre en œuvre un diagnostic de détérioration en utilisant une valeur de performance après détérioration obtenue en mettant à l'essai une performance du climatiseur de véhicule après une détérioration simulée.

3. Système de diagnostic de détérioration selon la revendication 2, dans lequel l'unité de diagnostic (107) est configurée de manière à mettre en œuvre un diagnostic de détérioration en comparant une valeur de performance d'une valeur de performance de fonctionnement incluse dans les nouvelles données de fonctionnement et la valeur de performance après détérioration à un produit d'une autre valeur de performance et du facteur de correction.

4. Système de diagnostic de détérioration selon l'une quelconque des revendications 1 à 3, dans lequel l'unité de calcul (105) est configurée de manière à estimer la performance du climatiseur de véhicule au cours du fonctionnement effectif dans une condition environnementale identique ou similaire à la condition environnementale à l'instant d'essai, et à calculer un facteur de correction à partir d'une valeur de performance d'estimation correspondant à la valeur de performance obtenue par estimation, plutôt qu'à partir de la valeur de performance de fonctionnement incluse dans les données de fonctionnement sélectionnées et la valeur de performance avant détérioration.

5. Système de diagnostic de détérioration selon la revendication 4, dans lequel l'unité de calcul (105) est configurée de manière à déterminer la valeur de performance d'estimation, lorsque des données de fonctionnement, dans lesquelles au moins une valeur de condition coïncide avec celle des données d'essai, existent dans les données de fonctionnement accumulées par l'unité d'accumulation, sur la base des données de fonctionnement dans lesquelles les valeurs de ladite au moins une valeur de condition coïncident mutuellement dans les données de fonctionnement existantes.

6. Système de diagnostic de détérioration selon la revendication 4 ou 5, dans lequel l'unité de calcul (105) est configurée de manière à calculer la valeur de performance d'estimation, lorsque des données de fonctionnement, dans lesquelles toutes les valeurs de condition coïncident avec celles des données d'essai, n'existent pas dans les données de fonctionnement accumulées par l'unité d'accumulation, en analysant une corrélation entre des valeurs de condition incluses dans les données de fonctionnement accumulées par l'unité d'accumulation et une valeur de performance de fonctionnement.

7. Système de diagnostic de détérioration selon l'une quelconque des revendications 4 à 6, dans lequel :
les données de fonctionnement accumulées par l'unité d'accumulation et les données d'essai incluent une première valeur de condition correspondant à une valeur de condition indiquant un type d'une condition environnementale ; et
l'unité de calcul (105) est configurée de manière à calculer, lorsque des données de fonctionnement, dans lesquelles la première valeur de condition coïncide avec celle des données d'essai, n'existent pas dans les données de fonctionnement accumulées par l'unité d'accumulation, une valeur approximative d'une valeur de performance de fonctionnement correspondant à la première valeur de condition incluse dans les données d'essai, en tant que la valeur de performance d'estimation, sur une courbe approximative représentant une corrélation entre la première valeur de condition incluse dans les données de fonctionnement accumulées par l'unité d'accumulation et une valeur de performance de fonctionnement.

8. Système de diagnostic de détérioration selon l'une quelconque des revendications 4 à 7, dans lequel les données de fonctionnement accumulées par l'unité d'accumulation et les données d'essai incluent respectivement des valeurs de condition, allant d'une première valeur de condition à une N-ième valeur de condition, correspondant à des valeurs de condition indiquant des conditions environnementales mutuellement différentes en termes de type, dans lequel « N » est un nombre entier supérieur à un ; et
dans lequel l'unité de calcul (105) est configurée de manière à regrouper, lorsque des données de fonctionnement, dans lesquelles au moins une valeur, d'une première valeur de condition à une M-ième valeur de condition, coïncide avec celle des données d'essai, n'existent pas dans les données de fonctionnement accumulées par l'unité d'accumulation, en prenant « M » comme un nombre entier égal à « N », des données de fonctionnement, dans lesquelles les valeurs d'une combinaison de valeurs de condition de la première valeur de condition à la M-1-ième valeur de condition coïncident mutuellement dans les données de fonctionnement accumulées par l'unité d'accumulation, à mettre en œuvre un processus consistant à calculer une valeur approximative d'une valeur de performance de fonctionnement correspondant à la M-ième valeur de condition incluse dans les données d'essai pour chaque groupe, sur une courbe approximative représentant une corrélation entre la M-ième valeur de condition incluse dans les données de fonctionnement de chaque groupe et une valeur de performance de fonctionnement, et en prenant « M » comme un nombre entier décrémenté de un, à mettre en œuvre le processus de manière répétée, jusqu'à ce que « M » devienne 1, et à calculer une valeur approximative d'une valeur de performance de fonctionnement correspondant à la première valeur de condition incluse dans les données d'essai, en tant que la valeur de performance d'estimation, sur une courbe approximative représentant une corrélation entre la première valeur de condition incluse dans les données de fonctionnement de chaque groupe dans le dernier regroupement, et la valeur approximative de la valeur de performance de fonctionnement calculée pour chaque groupe.

9. Système de diagnostic de détérioration selon l'une quelconque des revendications 4 à 8, dans lequel :
l'unité de calcul (105) est configurée de manière à calculer le facteur de correction en divisant la valeur de performance avant détérioration par l'une ou l'autre parmi la valeur de performance de fonctionnement incluse dans les données de fonctionnement sélectionnées et la valeur de performance d'estimation ; et
l'unité de diagnostic (107) est configurée de manière à comparer la valeur de performance après détérioration avec un produit de la valeur de performance de fonctionnement incluse dans les nouvelles données de fonctionnement et du facteur de correction, et à mettre en œuvre un diagnostic de détérioration du climatiseur de véhicule.

10. Système de diagnostic de détérioration selon l'une quelconque des revendications 4 à 9, dans lequel :
l'unité de calcul (105) est configurée de manière à calculer le facteur de correction en divisant l'une ou l'autre parmi la valeur de performance de fonctionnement incluse dans les données de fonctionnement sélectionnées et la valeur de performance d'estimation, par la valeur de performance avant détérioration ; et
l'unité de diagnostic (107) est configurée de manière à comparer la valeur de performance de fonctionnement, incluse dans les nouvelles données de fonctionnement, et un produit de la valeur de performance après détérioration et du facteur de correction, et à mettre en œuvre un diagnostic de détérioration du climatiseur de véhicule.

11. Procédé de diagnostic de détérioration pour un climatiseur de véhicule d'un train comprenant un système selon la revendication 1, le procédé de diagnostic de détérioration comprenant les étapes ci-dessous consistant à :
par le biais d'une unité d'accumulation (104), accumuler des données de fonctionnement incluant une valeur de performance de fonctionnement correspondant à une valeur de performance obtenue en mesurant une performance du climatiseur de véhicule au cours d'un fonctionnement effectif, et une valeur de condition indiquant une condition environnementale au cours du fonctionnement effectif ;
par le biais d'une unité de calcul (105), acquérir des données d'essai incluant une valeur de performance avant détérioration correspondant à une valeur de performance obtenue en mettant à l'essai une performance du climatiseur de véhicule avant détérioration, et une valeur de condition indiquant une condition environnementale à un instant d'essai, sélectionner des données de fonctionnement incluant une condition environnementale identique ou similaire à la condition environnementale à l'instant d'essai, à partir des données de fonctionnement accumulées dans l'unité d'accumulation, et calculer un facteur de correction à partir d'une valeur de performance de fonctionnement incluse dans les données de fonctionnement sélectionnées et de la valeur de performance avant détérioration ; et
par le biais d'une unité de diagnostic (107), acquérir de nouvelles données de fonctionnement, et mettre en œuvre un diagnostic de détérioration du climatiseur de véhicule sur la base d'une valeur de performance de fonctionnement incluse dans les nouvelles données de fonctionnement et du facteur de correction.

12. Programme de diagnostic de détérioration pour un climatiseur de véhicule d'un train, pour amener un ordinateur à exécuter un procédé selon la revendication 11, dans lequel l'ordinateur accumule, dans une mémoire, des données de fonctionnement incluant une valeur de performance de fonctionnement correspondant à une valeur de performance obtenue en mesurant une performance du climatiseur de véhicule au cours d'un fonctionnement effectif, et une valeur de condition indiquant une condition environnementale au cours du fonctionnement effectif, en vue de mettre en œuvre :
un processus consistant à acquérir des données d'essai incluant une valeur de performance avant détérioration correspondant à une valeur de performance obtenue en mettant à l'essai une performance du climatiseur de véhicule avant détérioration, et une valeur de condition indiquant une condition environnementale à un instant d'essai, à sélectionner des données de fonctionnement incluant une condition environnementale identique ou similaire à la condition environnementale à l'instant d'essai, à partir des données de fonctionnement accumulées dans la mémoire, et à calculer un facteur de correction à partir d'une valeur de performance de fonctionnement incluse dans les données de fonctionnement sélectionnées et de la valeur de performance avant détérioration ; et
un processus consistant à acquérir de nouvelles données de fonctionnement, et à mettre en œuvre un diagnostic de détérioration du climatiseur de véhicule sur la base d'une valeur de performance de fonctionnement incluse dans les nouvelles données de fonctionnement et du facteur de correction.
